# EUROPÄISCHE PATENTANMELDUNG

(11) **EP 2 781 253 A1**
(43) Veröffentlichungstag der Anmeldung: **24.09.2014**
(21) Anmeldenummer: 13160184.1
(22) Anmeldetag: 20.03.2013
(51) Int. Cl.: B01F 5/06, B01F 13/00, B05C 17/005, B65D 81/32

(54) **Zwischenstück für die Verbindung eines Austragelements mit einem Vorratsbehälter**

(71) Anmelder: Sulzer Mixpac AG, 9469 Haag (CH)
(72) Erfinder: Hiemer, Andreas, 9445 Rebstein (CH)
(74) Vertreter: Manitz, Finsterwald & Partner GbR

(57) **Zusammenfassung**

Zwischenstück (1) für die Verbindung eines Austragelements (13) mit einem Vorratsbehälter (17) für eine getrennte Vorratshaltung von mindestens zwei fliessfähigen Komponenten, mit einem ersten Kanal (2) zur Förderung einer ersten Komponente vom Vorratsbehälter (17) zum Austragelement (13) und einen zweiten Kanal (3) zur Förderung einer zweiten Komponente vom Vorratsbehälter (17) zum Austragelement (13), wobei der erste Kanal (2) und der zweite Kanal (3) getrennt ausgeführt sind, sodass die erste und die zweite Komponente getrennt durch das Zwischenstück (1) führbar sind. Erfindungsgemäss ist am ersten oder zweiten Kanal (2,3) ein Rückschlagventil (4) angeordnet und derart ausgestaltet, dass der erste oder zweite Kanal (2,3) mittels des Rückschlagventils (4) verschliessbar sind.

## Beschreibung

Die Erfindung betrifft ein Zwischenstück für die Verbindung eines Austragelements mit einem Vorratsbehälter für eine getrennte Vorratshaltung von mindestens zwei fliessfähigen Komponenten gemäss dem Oberbegriff des unabhängigen Anspruchs 1.

Aus der EP 2 221 114 A1 ist ein Zwischenstück für die Verbindung eines Austragelements mit einem Vorratsbehälter bekannt. Das Zwischenstück umfasst dabei einen ersten und einen zweiten Kanal mit jeweils einer Einlassöffnung am ersten und zweiten Kanal. Gemäss dieser Lösung umfasst eine der beiden Einlassöffnungen ein Element, sodass eine der Einlassöffnungen mittels des Elements in einer passenden Stellung zum Vorratbehälter ausrichtbar ist. Das Element kann nur in einer einzigen Position relativ zur zugehörigen Ausnehmung positioniert werden, was zur Folge hat, dass das Zwischenstück nur in einer einzigen Position an den Vorratsbehälter montierbar ist. Aufgrund dieser Anordnung kann eine Kontamination oder ein Vermischen der fliessfähigen Komponenten beim Verbinden des Zwischenstücks bzw. dem Austragelements mit dem Vorratsbehälter vermieden werden.

Das in der EP 2 221 114 A1 beschriebene Zwischenstück vermeidet eine Kontamination der fliessfähigen Komponenten vor dem bestimmungsgemässen Verbinden von Vorratsbehälter und Austragelement. Allerdings kann es nach dem Verbinden zu einem unkontrollierten Rückfluss aus dem Austragelement in das Zwischenstück oder sogar in den Vorratsbehälter kommen. Im schlimmsten Fall kann dabei, eine gesamte Austragvorrichtung unbrauchbar werden, wenn sich die erste und zweite Komponente im Vorratsbehälter vermischen oder diese sogar aushärten.

Aufgabe der Erfindung ist daher, ein Zwischenstück vorzuschlagen, welches es ermöglicht, ein Vermischen und eine Kontamination der fliessfähigen Komponenten zu vermeiden.

Erfindungsgemäß wird diese Aufgabe durch ein Zwischenstück mit den Merkmalen des Anspruchs 1 gelöst.

Die abhängigen Ansprüche beziehen sich auf besonders vorteilhafte Ausführungsformen der Erfindung.

Die Erfindung betrifft ein Zwischenstück für die Verbindung eines Austragelements mit einem Vorratsbehälter für eine getrennte Vorratshaltung von mindestens zwei fliessfähigen Komponenten. Das Zwischenstück umfasst dabei einen ersten Kanal zur Förderung einer ersten Komponente vom Vorratsbehälter zum Austragelement und einen zweiten Kanal zur Förderung einer zweiten Komponente vom Vorratsbehälter zum Austragelement, wobei der erste Kanal und der zweite Kanal getrennt ausgeführt sind, sodass die erste und die zweite Komponente getrennt durch das Zwischenstück führbar sind. Erfindungsgemäss ist am ersten oder zweiten Kanal ein Rückschlagventil angeordnet und derart ausgestaltet, dass der erste oder zweite Kanal mittels des Rückschlagventils verschliessbar sind.

Die Aufgabe wird dadurch gelöst, dass das Rückschlagventil am, bevorzugt im, besonders bevorzugt in einem Bereich einer ersten Auslassöffnung des ersten Kanals oder einer zweiten Auslassöffnung des zweiten Kanals des Zwischenstücks angeordnet ist. Ausserdem verschliesst das Rückschlagventil den ersten oder zweiten Kanal, sobald eine Materialströmung der fliessfähigen Komponenten unterbrochen wird. Das Rückschlagventil kann dabei entweder im ersten oder zweiten Kanal des Zwischenstücks angeordnet sein, es kann aber auch jeweils ein Rückschlagventil im ersten und zweiten Kanal angeordnet sein.

Das Rückschlagventil umfasst einen Kopf, ein Federelement sowie einen ersten oder zweiten Ventilsitz. Das Federelement übt einen Öffnungsdruck auf den Kopf aus und drückt den Kopf in den ersten oder zweiten Ventilsitz, sodass der erste oder zweite Kanal fluiddicht verschliessbar ist. Unter fluiddicht ist zu verstehen, dass die fliessfähigen Komponenten nicht weiter durch den ersten oder zweiten Kanal strömen können. Wird ein Austragdruck, der dem Öffnungsdruck entgegenwirkt, beispielsweise auf die fliessfähigen Komponenten im Vorratsbehälter, ausgeübt, so wird der Kopf aus dem ersten oder zweiten Ventilsitz gedrückt und das Rückschlagventil geöffnet. Wirkt kein Austragdruck, dann wirkt kein Druck oder lediglich der Öffnungsdruck des Federelements auf den Kopf und der Kopf verschliesst den ersten oder zweiten Ventilsitz, insbesondere eine Öffnung im ersten oder zweiten Ventilsitz, beziehungsweise den ersten oder zweiten Kanal.

Das Rückschlagventil kann, in Abhängigkeit von den verwendeten fliessfähigen Komponenten, einen vorbestimmtem Öffnungsdruck haben, beispielsweise 0,01 bis 0,7 bar, insbesondere 0,1 bis 0,55 bar. Somit ist der zu überwindende Öffnungsdruck des Rückschlagventils klein im Hinblick auf den relativ hohen erforderlichen Austragdruck. Der Öffnungsdruck ist jedoch ausreichend, um ein Verschliessen des ersten oder zweiten Kanals zu bewirken und eine erwünschte Rückwirkung gegen den Vorratsbehälter hin zu erzeugen, sodass sogar dünnflüssige fliessfähige Komponenten mit einem geringen Strömungswiderstand zurückgehalten werden.

Vorteilhafterweise wird somit erreicht, dass das Rückschlagventil den ersten oder zweiten Kanal verschliesst und ein Strömen der fliessfähigen Komponenten unterbricht, sobald ein jeweils beim Austragen bestehender Austragdruck nachlässt. Somit verhindert das Rückschlagventil einen Rückfluss bereits ausgetretener fliessfähiger Komponenten aus dem Austragelement in das Zwischenstück bzw. aus dem Vorratsbehälter in das Zwischenstück und eine Kontamination bzw. ein Vermischen der Komponenten aufgrund des Rückflusses. Als vorteilhaften Nebeneffekt hat das Rückschlagventil eine Schliessfunktion und stoppt die Materialströmung. Zusätzlich verhindert das Rückschlagventil auch unkontrollierte Kriechströmungen, wenn kein Austragdruck vorhanden ist, und zwar sowohl im Zwischenstück, als auch im Austragelement, sodass eine örtliche Inhomogenität der bereits ausgetretenen fliessfähigen Komponenten, insbesondere bei unterschiedlicher Viskosität der Komponenten, unterbunden wird.

Das Zwischenstück umfasst dabei einen ersten Kanal zur Förderung einer ersten Komponente vom Vorratsbehälter zum Austragelement und einen zweiten Kanal zur Förderung einer zweiten Komponente vom Vorratsbehälter zum Austragelement, wobei der erste Kanal und der zweite Kanal getrennt ausgeführt sind. Selbstverständlich können auch mehr als zwei Kanäle vorgesehen sein. Ausserdem ist eine erste Einlassöffnung vorgesehen, welche in den ersten Kanal mündet, sowie eine zweite Einlassöffnung, welche in den zweiten Kanal mündet.

Der erste Kanal endet in einer ersten Auslassöffnung und der zweite Kanal in einer zweiten Auslassöffnung, die auf einer Stirnfläche des Zwischenstücks angebracht sind und eine Auslassebene aufspannen. Die Auslassebene liegt, beispielsweise zu einer Einlassebene, die von der ersten und zweiten Einlassöffnung aufgespannt ist, parallel. Es ist aber beispielsweise auch möglich, dass die Auslassebene und Einlassebene einen Winkel bilden und nicht parallel liegen. Von den Auslassöffnungen gelangen die fliessfähigen Komponenten zum Austragelement. Die Stirnfläche kann eben sein, kann aber auch ein Leitelement zur Umlenkung der Materialströme aufweisen, welches von der Stirnfläche ragt.

Das Zwischenstück ist für die Verbindung eines Austragelements mit einem Vorratsbehälter für eine getrennte Vorratshaltung von mindestens zwei fliessfähigen Komponenten vorgesehen. Das Zwischenstück kann in dieser Form sowohl vom Austragelement als auch vom Vorratsbehälter entkoppelt sein und als ein einzelnes Bauteil vorliegen. Ebenso kann das Zwischenstück aber auch beispielsweise mit dem Austragelement oder dem Vorratsbehälter ein gemeinsames Bauteil ausbilden. Das heisst, das Zwischenstück kann beispielsweise entweder mit einem eigenen Werkzeug oder aber auch als Teil des Austragelement oder des Vorratsbehälters hergestellt werden, bevorzugt mit einem Spritzgiessverfahren.

Das Austragelement umfasst ein Gehäuse und ein Mischelement, wobei das Gehäuse einen Einlassbereich aufweist. Das Austragelement kann beispielsweise ein Mischer sein, insbesondere ein statischer Mischer, und für ein Mischen von fliessfähigen Komponenten geeignet sein. Das Mischelement kann beispielsweise wiederum eines oder mehrere starre oder strömungsbeeinflussende Umlenkelemente umfassen, sodass durch die Strömungsbewegung eine Vermischung der fliessfähigen Komponenten bewirkt werden kann. Das Mischelement kann abwechselnd den Stoffstrom aufteilen und zusammenführen, wodurch die Vermischung erreicht wird.

Das Gehäuse kann einen Querschnitt aufweisen, der kreisrund ist, so dass das Gehäuse eine hauptsächlich hohlzylindrische Grundform aufweist, die beispielweise in Richtung eines Endes des Gehäuses konisch zulaufend verengt. Der Querschnitt des Gehäuses kann aber auch eine andere Form, wie beispielsweise oval, rechteckig oder quadratisch aufweisen.

Ein zu mischendes Fluid umfasst in der Regel zwei verschiedene zu mischende fliessfähige Komponenten. Es können aber auch mehr als zwei fliessfähige Komponenten ein zu mischendes Fluid ausbilden. In den meisten Fällen liegen die fliessfähigen Komponenten in flüssigem Zustand oder als zähflüssige Massen vor. Hierzu zählen beispielsweise Pasten, Klebstoffe, aber auch fliessfähige Komponenten, welche einen Einsatz im medizinischen Bereich finden, die bevorzugt pharmazeutische Wirkstoffe enthalten, oder aber fliessfähige Komponenten beispielsweise für kosmetische Anwendungen oder Anwendungen im Lebensmittelbereich. Im Austragelement können beispielsweise sowohl leicht als auch schwer mischbare oder leichtviskose oder hochviskose Komponenten verarbeitet werden. Insbesondere finden derartige Austragelemente auch Verwendung als Einwegmischer zur Mischung eines aushärtenden Fluids aus fliessfähigen Komponenten, wie beispielsweise eine Mischung von Mehrkomponentenklebstoffen oder Dichtmassen. Eine andere bevorzugte Verwendung liegt in der Mischung von Abformmassen im Dentalbereich.

Das Austragelement kann mittels des Zwischenstücks am Vorratsbehälter, insbesondere an ein Austraggerät, beispielsweise eine Austragkartusche oder eine Mehrkomponentenkartusche angebracht werden. Der Vorratbehälter kann mehrere, insbesondere zylinderförmigen Kammern, umfassen, wobei Doppelkartuschen mit zwei Kammern bevorzugt werden. Die Kammern, d.h. der Innenraum der Kartuschen, können kreiszylinderförmig ausgebildet sein oder einen elliptischen oder polygonalen Querschnitt aufweisen. Die Kammern enthalten im befüllten Zustand zumindest je eine fliessfähige Komponente einer Füllmasse. Diese Füllmasse kann von der Umgebung beispielsweise durch einen frei in der Kammer verschiebbaren Kolben getrennt sein. Der Kolben enthält beispielsweise Dichtungselemente, welche den Kammerinhalt fluiddichtend von der Umgebung abschliessen. Die Komponenten in den Kammern werden mit Hilfe eines Ausdrückstössels ausgetragen, welcher mit dem entsprechenden Kolben derart zusammenwirkt, dass der Kolben in der Kammer verschoben werden kann.

Der Vorratbehälter beinhaltet neben den zylinderförmigen Kammern auch eine als einen Auslassbereich dienende Anformung. Dabei betrifft der Auslassbereich beispielsweise eine Gesamtheit von rohrförmigen Anformungen der einzelnen Kammern und / oder ein beispielsweise zylindrisches Anschlussteil. Der Auslassbereich kann von einer Drehkappe übergreifbar sein und für jede Komponente eine Ausgabeöffnung aufweisen, d.h. die einzelnen Komponenten werden bis mindestens bis zur Ausgabeöffnung voneinander getrennt gehalten, so dass eine vorzeitige Vermischung der Komponenten verhindert wird. Die Ausgabeöffnungen können durch die Drehkappe somit fluiddicht verschlossen gehalten werden, sodass die Komponenten in den Kammern der Mehrkomponentenkartusche über längere Zeiträume gelagert werden können und auch in der Mehrkomponentenkartusche transportiert werden können.

In einem besonders bevorzugten Ausführungsbeispiel umfasst das Zwischenstück ein oberes Element und ein unteres Element, wobei das Rückschlagventil zwischen dem oberen und dem unteren Element am ersten oder zweiten Kanal angeordnet ist. Ausserdem umfassen das obere Element oder das untere Element ein Verbindungselement und das obere Element und das untere Element sind mittels des Verbindungselements miteinander verbunden.

Das Zwischenstück kann somit mehrteilig, bevorzugt zweiteilig, ausgebildet sein. Das obere Element ist dabei in Richtung des Austragelements ausgerichtet und kann mit dem Austragelement verbunden sein. Das untere Element ist in Richtung des Vorratsbehälters ausgerichtet und kann mit dem Austragelement verbunden sein. Ausserdem umfassen das obere oder untere Element ein Verbindungselement, wobei unter dem Verbindungselement beispielsweise ein Klebstoff oder auch ein Zapfen und ein Zapfenloch bzw. ein Schlitz und gegebenenfalls weitere Befestigungsmittel zu verstehen ist. Somit kann vorteilhafterweise zunächst das Rückschlagventil zwischen oberem und unterem Element montiert werden und dann das obere und untere Element miteinander verbunden werden.

Im oberen und unteren Element ist jeweils ein Anteil des ersten und des zweiten Kanals ausgebildet, wobei der Anteil des ersten Kanals und des zweiten Kanals getrennt ausgeführt ist, sodass die erste und die zweite Komponente getrennt durch das obere und untere Element führbar sind, sich die fliessfähigen Komponenten also nicht vermischen. Sind das obere und untere Element miteinander verbunden, sind der Anteil des oberen und der Anteil des unteren Elements als der erste und zweite Kanal ausgebildet. Dabei können das obere und untere Element fluiddicht, also ohne das die fliessfähigen Komponenten unkontrolliert austreten, miteinander verbunden werden. Bei Bedarf kann aber auch eine Dichtung zwischen dem oberen und unteren Element angeordnet sein. Die Einlassöffnungen des Zwischenstücks sind dabei im unteren Element und die Auslassöffnungen im oberen Element ausgebildet.

Das Rückschlagventil ist zwischen dem oberen und dem unteren Element, also am, insbesondere im ersten oder zweiten Kanal angeordnet. Bevorzugt sind der erste oder zweite Ventilsitz am unteren Element und / oder das Federelement am oberen Element angeordnet. Vorteil ist, dass das gleiche Zwischenstück somit wahlweise, in Abhängigkeit von der Anwendung, mit oder ohne Rückschlagventil bestückt werden kann. Auch der Öffnungsdruck, also eine Rückstellkraft des Federelements kann wahlweise in Abhängigkeit von der ersten oder zweiten Komponente variiert werden. Ausserdem ist dass Rückschlagventil auf diese Weise besser herstellbar und montierbar.

In Ausgestaltung der Erfindung umfasst das Rückschlagventil einen Kopf und ein Federelement, wobei der Kopf des Rückschlagventils bevorzugt als Kugel ausgeführt ist. Das Federelement hat die Funktion den Kopf mit dem benötigten Öffnungsdruck im ersten oder zweiten Ventilsitz festzuhalten und diesen zu verschliessen. Das Federelement kann dabei beispielsweise als Feder, insbesondere als Schraubenfeder, bevorzugt als eine gewundene Torsionsfeder, auch Spiralfeder genannt, aber auch als eine Torsionsfeder oder eine Biegefeder ausgeführt sein. Der Kopf, auch als ein Absperrkörper bezeichnet, kann bevorzugt kugelförmig, aber beispielsweise auch tellerförmig, schlauchförmig, kolbenförmig oder kegelförmig sein. Der Kopf kann ausserdem mit einem Schaft verbunden sein, beispielsweise kann die Kugel mit einem Schaft verbunden sein, wobei Schaft und Kopf ein- oder mehrteilig sein können. Vorteilhafterweise kann so der Kopf mit dem Schaft im Federelement justiert werden. Ein weiterer Vorteil ist, dass die technischen Eigenschaften des Rückschlagventils aufgrund eines mehrteiligen Aufbaus, je nach Ausführungsbeispiel, an das Zwischenstück und die fliessfähigen Komponenten angepasst und variiert werden kann.

In Ausgestaltung der Erfindung ist im ersten oder zweiten Kanal eine umlaufende Kante als erster Ventilsitz oder zweiter Ventilsitz derart ausgebildet, dass das Federelement einen Öffnungsdruck auf den Kopf ausübt, der Kopf am ersten oder zweiten Ventilsitz anliegt und den ersten oder zweiten Kanal verschliesst. Die umlaufende Kante kann zwischen den Einlassöffnungen und Auslassöffnungen des Zwischenstücks im ersten oder zweiten Kanal angeordnet sein. Die umlaufende Kante ist dabei derart im ersten oder zweiten Kanal ausgebildet, dass das Federelement einen Öffnungsdruck auf den Kopf ausübt und diesen in den ersten oder zweiten Ventilsitz drückt. Der Ventilsitz hat ausserdem eine Querschnittsform, die der Querschnittsform des Kopfes angepasst ist, beispielsweise ringförmig oder mehreckig, sodass der Kopf den Ventilsitz in drucklosem Zustand fluiddicht verschliesst. Vorteilhafterweise können so der erste und zweite Ventilsitz als Teil des Zwischenstücks ausgebildet werden, wodurch das Rückschlagventil kostengünstiger herstellbar und effizienter montierbar ist.

Als besondere Massnahme umfasst das obere Element ein Fixierungselement und das Federelement ist am Fixierelement angeordnet und mittels des Fixierelements justierbar. Das Fixierungselement kann in Verbindung mit dem oberen Element einteilig oder aber zwei- oder mehrteilig ausgebildet sein. Das Fixierungselement kann beispielsweise als Schaft oder Zapfen oder aber als Ausnehmung ausgebildet sein. Das Federelement kann beispielsweise einfach auf oder in das Fixierungselement auf- bzw. eingesteckt und justiert werden. Das Fixierungselement kann aber auch derart ausgestaltet sein, dass das Federelement in die Ausnehmung beispielsweise mit dieser verbunden oder sogar eingedreht bzw. verrastet wird. Das Fixierelement kann das Federelement bzw. das Rückschlagventil justieren, indem es das Federelement in Richtung des ersten oder zweiten Kanals ausrichtet. Vorteil ist auch hier die einfache Montage des Rückschlagventils.

Das erfindungsgemässe Zwischenstück kann auch Teil eines Austragelements sein, wobei das Austragelement ein Gehäuse umfasst, welches zumindest ein Mischelement enthält, und das Gehäuse einen Einlassbereich aufweist, wobei das Zwischenstück in dem Einlassbereich angeordnet ist. Wie bereits beschrieben, umfasst das Austragelement ein Gehäuse und ein Mischelement, wobei das Gehäuse einen Einlassbereich aufweist.

Das Austragelement kann beispielsweise ein Mischer sein, insbesondere ein statischer Mischer, und zum Mischen von fliessfähigen Komponenten geeignet sein. Vorzugsweise ist eine Innenkontur des Zwischenstücks, insbesondere im Bereich der ersten und zweiten Auslassöffnung des oberen Elements, so bemessen, dass diese an einem Bereich des Austragelements, insbesondere im Einlassbereich, flächig an das Austragelement anliegen kann. Vorteilhafterweise wird durch diese Massnahme eine sichere Führung des Zwischenstücks gewährleistet und Leckage zwischen dem Austragelement und dem Zwischenstück vermieden. Da es konstruktiv und von der Handhabung besonders einfach ist, ist es bevorzugt, wenn das Zwischenstück gewindefrei mit dem Austragelement, insbesondere dem Gehäuse verbindbar ist, beispielsweise mittels einer Schnappverbindung. Das Austragelement und das Zwischenstück können auch über eine Leitung beispielsweise ein Rohr oder Schlauch verbunden werden, sodass eine Innenkontur des Zwischenstücks so bemessen ist, dass diese an einem Bereich der Leitung, insbesondere an einem Einlassbereich der Leitung, flächig anliegen kann. Somit können vorteilhafterweise verschiedene Austragelemente mit dem gleichen Zwischenstück verbunden werden. Es ist auch möglich, dass das Zwischenstück an das Austragelement angeformt ist, sodass das Zwischenstück einstückig mit dem Austragelement, insbesondere mit dem Einlassbereich des Gehäuses, ausgebildet ist. Dazu können das Zwischenstück und das Austragelement in einem Fertigungsschritt als einstückiges Bauteil hergestellt werden, sodass vorteilhafterweise ein einstückiges Austragelement mit einem Zwischenstück und einem Rückschlagventil herstellbar ist. Das Zwischenstück oder das Austragelement können beispielsweise aus Kunststoff vorzugsweise im Spritzgiessverfahren hergestellt werden. Insbesondere kann der Kunststoff ein geschäumtes Polymer enthalten, wobei gegenüber dem konventionellen Spritzgiessverfahren in diesem Fall zur Herstellung ein treibmittelhaltiges Polymer eingesetzt wird.

Das erfindungsgemässe Zwischenstück kann aber auch als Teil eines Vorratsbehälters mit einer getrennten Vorratshaltung für mehrere Komponenten sein, wobei der Vorratsbehälter einen Auslassbereich aufweist und das Zwischenstück in dem Auslassbereich angeordnet ist. Das Zwischenstück und der Vorratsbehälter können aber auch zweiteilig ausgeführt sein. Diese Ausführung hat den Vorteil, dass beispielsweise verschiedene Zwischenstücke mit dem gleichen Vorratsbehälter oder aber verschiedene Vorratsbehälter mit dem gleichen Zwischenstück verbunden werden können.

Der Vorratsbehälter umfasst mindestens eine erste und eine zweite Kammer, um eine erste und eine zweite fliessfähige Komponente auszutragen. Es ist aber auch möglich, dass der Vorratsbehälter eine dritte und ggf. weitere Kammern aufweist und so drei oder mehr Komponenten ausgetragen und vermischt werden können. Der Vorratsbehälter kann beispielsweise aus Kunststoff ausgeführt und mittels eines Spritzgussverfahrens hergestellt sein. Vorzugsweise ist eine Innenkontur des Zwischenstücks, insbesondere im Bereich der ersten und zweiten Einlassöffnung des unteren Elements, beispielsweise die Einlassebene, so bemessen, dass diese an einem Bereich des Vorratsbehälters, insbesondere am Auslassbereich, flächig anliegen kann. Vorteilhafterweise wird durch diese Massnahme eine sichere Führung des Zwischenstücks gewährleistet und Leckagen zwischen dem Vorratsbehälter und dem Zwischenstück vermieden. Da es konstruktiv und von der Handhabung besonders einfach ist, ist es bevorzugt, wenn das Zwischenstück gewindefrei mit dem Vorratsbehälter verbindbar ist, beispielsweise mittels einer Schnappverbindung. Der Vorratsbehälter und das Zwischenstück können auch mittels einer Leitung beispielsweise einem Rohr oder einem Schlauch verbunden werden, wobei eine Innenkontur des Zwischenstücks so bemessen ist, dass diese an einem Bereich der Leitung, insbesondere an einem Auslassbereich der Leitung, flächig anliegen kann. Somit können vorteilhafterweise verschiedene Vorratsbehälter an das gleiche Zwischenstück gekoppelt werden.

Das erfindungsgemässe Zwischenstück kann aber auch Teil einer Austragvorrichtung mit einem Austragelement oder mit einem Vorratsbehälter sein. Die Austragvorrichtung kann eine Kombination des Vorratsbehälters mit dem Zwischenstücks und dem Austragelement sein. Als Beispiel für solch eine Austragvorrichtung sei insbesondere eine Mehrkomponentenkartusche genannt, die mit dem Zwischenstück verbunden ist und das Zwischenstück mit dem Austragelement. Die Austragvorrichtung kann ein Betätigungselement aufweisen. Das Betätigungselement kann einen ersten und einen zweiten Kolben umfassen, wobei beispielsweise der erste Kolben in der ersten Kammer und der zweite Kolben in der zweiten Kammer verschiebbar angeordnet sind. Durch Verschieben der Kolben in Richtung Austragöffnung, also in Austragrichtung können die erste und zweite Komponente in die erste und zweite Einlassöffnung des Zwischenstücks gedrückt werden und einen Austragdruck auf das Rückschlagventil ausüben.

Das Verschieben erfolgt dabei insbesondere von Hand. Das Betätigungselement ist dabei teilweise innerhalb des Vorratsbehälters angeordnet, womit sich ein besonders kompakter Aufbau der Austragvorrichtung ergibt.

Weitere Vorteile, Merkmale und Einzelheiten der Erfindung ergeben sich aus den abhängigen Ansprüchen sowie anhand der Beschreibung der Ausführungsbeispiele und anhand der Zeichnungen.

Im Folgenden wird die Erfindung sowohl in apparativer als auch in verfahrenstechnischer Hinsicht anhand von Ausführungsbeispielen unter Bezugnahme auf die Zeichnungen näher erläutert. In der schematischen Zeichnung zeigen:
- Fig. 1: einen Schnitt durch ein Zwischenstück gemäss einem ersten Ausführungsbeispiel der Erfindung
- Fig. 2: einen Schnitt durch ein Austragelement mit einem Zwischenstück gemäss einem zweiten Ausführungsbeispiel der Erfindung
- Fig. 3: einen Schnitt durch einen Vorratbehälter mit einem Zwischenstück gemäss einem dritten Ausführungsbeispiel der Erfindung
- Fig. 4: einen Schnitt durch eine Austragvorrichtung mit einem Zwischenstück gemäss einem vierten Ausführungsbeispiel der Erfindung
- Fig. 5: einen Schnitt durch ein Austragelement mit einem Zwischenstück gemäss einer Variante des zweiten Ausführungsbeispiel der Erfindung
- Fig. 6: eine dreidimensionale detaillierte Darstellung eines Zwischenstücks 1 gemäss dem ersten Ausführungsbeispiels der Erfindung.

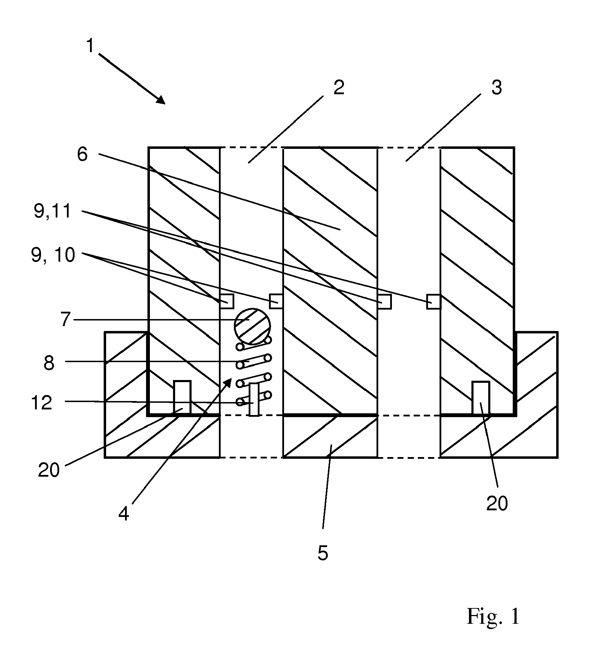

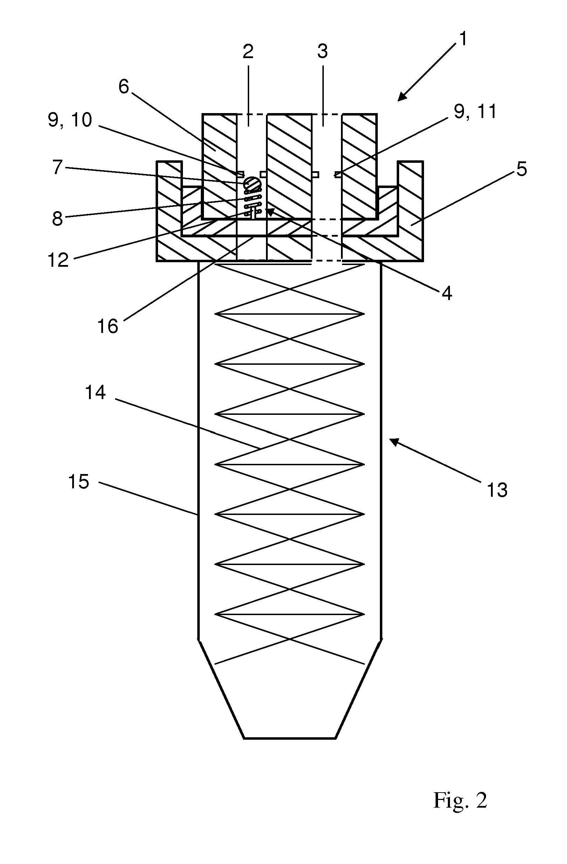

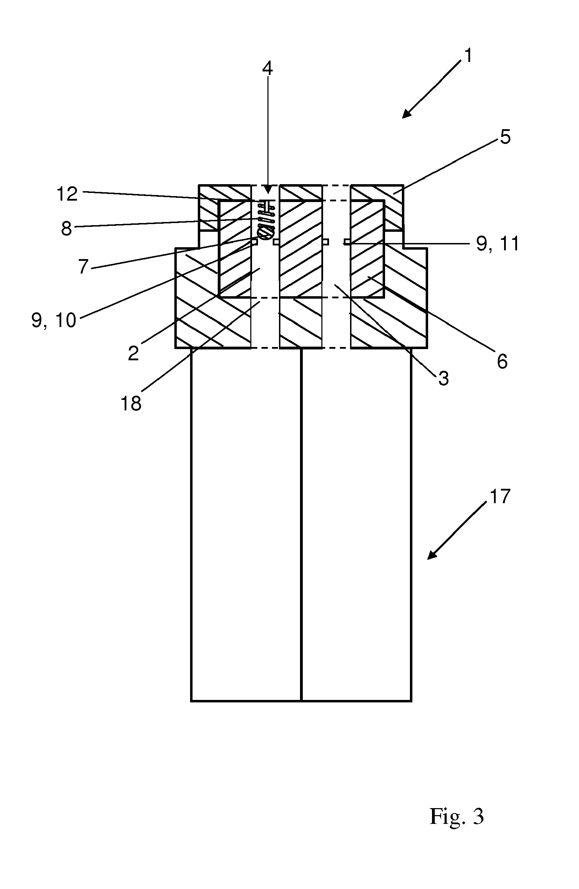

Fig. 1 zeigt einen Schnitt durch ein Zwischenstück 1 gemäss einem ersten Ausführungsbeispiel der Erfindung. Das Zwischenstück 1 ist zweiteilig und umfasst ein oberes Element 5 und ein unteres Element 6. Das Zwischenstück 1 umfasst einen ersten Kanal 2 zur Förderung einer ersten Komponente von einem Vorratsbehälter 17 (siehe Fig. 3) zu einem Austragelement 13 (siehe Fig. 2) und einen zweiten Kanal 3 zur Förderung einer zweiten Komponente vom Vorratsbehälter 17 zum Austragelement 13. Der erste und zweite Kanal 2,3 führen dabei durch das obere und untere Element 5,6. Ausserdem sind der erste Kanal 2 und der zweite Kanal 3 getrennt ausgeführt, sodass die erste und die zweite Komponente getrennt durch das Zwischenstück 1 führbar sind. Ein Rückschlagventil 4 ist zwischen dem oberen und dem unteren Element 5,6 am ersten Kanal 2 angeordnet. Im unteren Element 6 ist im ersten und zweiten Kanal 2,3 eine umlaufende Kante 9 als erster Ventilsitz 10 und zweiter Ventilsitz 11 ausgebildet. Das Rückschlagventil 4 umfasst einen Kopf 7 und ein Federelement 8, wobei das Federelement 8 einen Öffnungsdruck auf den Kopf 7 ausübt und der Kopf 7 den ersten Ventilsitz 10 verschliesst. Im vorliegenden Ausführungsbeispiel ist der Kopf 7 des Rückschlagventils 4 als Kugel 7 ausgeführt. Das obere Element 5 umfasst ausserdem ein Fixierelement 12, mit welchem das Federelement 8 im ersten Kanal 2 angeordnet ist und mittels welchem das Federelement 8 justierbar ist. Damit das obere Element 5 und untere Element miteinander verbunden werden können, umfassen das obere Element 5 oder das untere Element 6 ein Verbindungselement 20.

Fig. 2 zeigt einen Schnitt durch ein Austragelement 13 mit einem Zwischenstück 1 gemäss einem zweiten Ausführungsbeispiel der Erfindung. Das Austragelement 13 umfasst ein Gehäuse 15, welches zumindest ein Mischelement 14 enthält, und einen Einlassbereich 16. Das Zwischenstück 1 ist dabei im Einlassbereich 16 angeordnet. Das Austragelement 13 und das Zwischenstück 1 sind zweiteilig ausgeführt und das Austragelement 13 ist mit dem Zwischenstück 1, insbesondere mit dem oberen Element 5, im Einlassbereich 16 verbunden, beispielsweise verschraubt, verrastet oder mittels eines Schnappverschlusses verbunden. Es ist aber auch möglich, dass das Austragelement 13 und das Zwischenstück 1 als eine einteilige Einrichtung hergestellt werden. Im Gehäuse 15 ist ein Mischelement 14 angeordnet, das als ein Wendelmischer mit einer helixförmigen Struktur ausgebildet ist. Das Mischelement 14 hat die Funktion, die einzelnen Komponenten gut zu durchmischen, sodass ein im Wesentlichen homogenes Fluid entsteht.

Fig. 3 zeigt einen Schnitt durch einen Vorratbehälter 17 mit einem Zwischenstück 1 gemäss einem dritten Ausführungsbeispiel der Erfindung. Der Vorratsbehälter 17 weist einen Auslassbereich 18 auf und das Zwischenstück 1 ist im Auslassbereich 18 angeordnet. Der Vorratsbehälter 17 und das Zwischenstück 1 ist zweiteilig ausgeführt sein und der Vorratsbehälter 17 ist mit dem Zwischenstück 1, insbesondere mit dem unteren Element 6, im Auslassbereich 18 verbunden, beispielsweise verschraubt, verrastet oder mittels eines Schnappverschlusses verbunden. Es ist aber auch möglich, dass der Vorratsbehälter 17 und das Zwischenstück 1 als eine einteilige Einrichtung hergestellt werden.

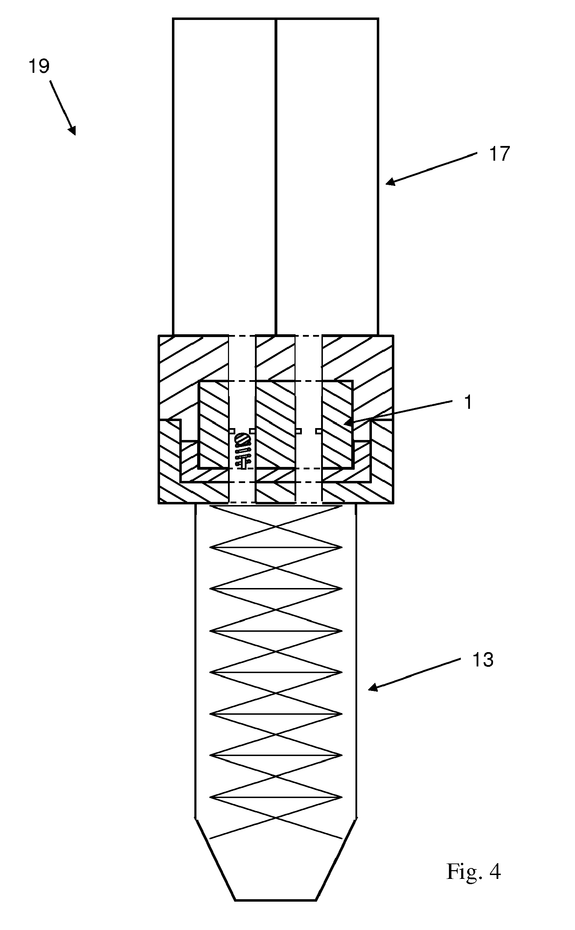

Fig. 4 zeigt schematisch einen Schnitt durch eine Austragvorrichtung 19 mit einem Zwischenstück 1 gemäss einem vierten Ausführungsbeispiel der Erfindung. Die Austragvorrichtung 19 umfasst einen Vorratsbehälter 17, in Form einer Kartusche, für eine erste und zweite fliessfähige Komponente, ein Austragelement 13 und ein Zwischenstück 1. Wie bereits beschrieben, umfasst das Austragelement 13 ein Gehäuse 13, welches wiederum ein Mischelement 14 umfasst. Derartige Mischelemente sind, wie beispielsweise in Fig. 4 gezeigt, als Wendelmischer mit einer helixförmigen Struktur ausgebildet. Die Austragvorrichtung 19 hat die Funktion, die mindestens zwei fliessfähigen Komponenten vom Vorratsbehälter 17 über das Zwischenstück in das Austragelement zu befördern und dort gut zu durchmischen, sodass ein im Wesentlichen homogenes Fluid entsteht. Der Vorratsbehälter 17 der Austragvorrichtung 19 ist mittels des Zwischenstücks 1 mit dem Austragelement 13 verbunden. Das Zwischenstück 1 umfasst einen ersten Kanal 2 und einen zweiten Kanal 3, wobei die erste Komponente im ersten Kanal 2 vom Vorratsbehälter 17 zum Austragelement 13 und die zweite Komponente im zweiten Kanal 3 vom Vorratsbehälter 17 zum Austragelement 13 befördert wird. Selbstverständlich können im Zwischenstück 1 auch mehr als zwei Kanäle enthalten sein, wenn mehr als zwei Komponenten voneinander getrennt dem Austragelement 13 zugeführt werden sollen. Das Rückschlagventil 4, das im ersten Kanal 2 angeordnet ist, verschliesst den ersten Kanal 2, wenn kein Austragdruck auf den Kopf 7 ausgeübt wird und nur der Öffnungsdruck wirkt. Das Rückschlagventil 4 öffnet sich, wenn ein Austragdruck ausgeübt wird, wobei der Austragdruck dazu grösser als der Öffnungsdruck sein muss.

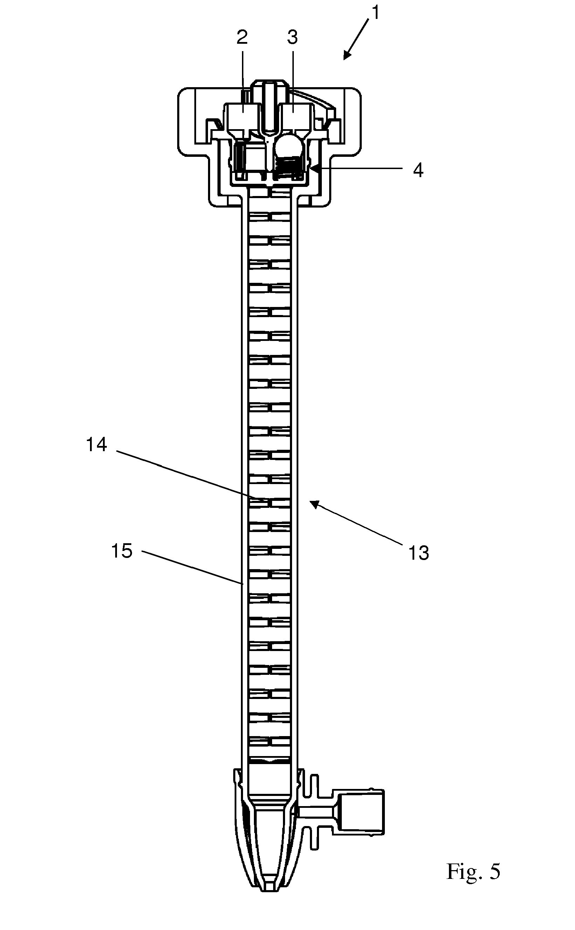

Fig. 5 zeigt einen Schnitt durch ein Austragelement 13 mit einem Zwischenstück 1 gemäss einer Variante des zweiten Ausführungsbeispiels der Erfindung und entspricht im Wesentlichen Fig. 3. Das Austragelement 13 und das Zwischenstück 1 sind dabei als einteilige Einrichtung ausgebildet und hergestellt.

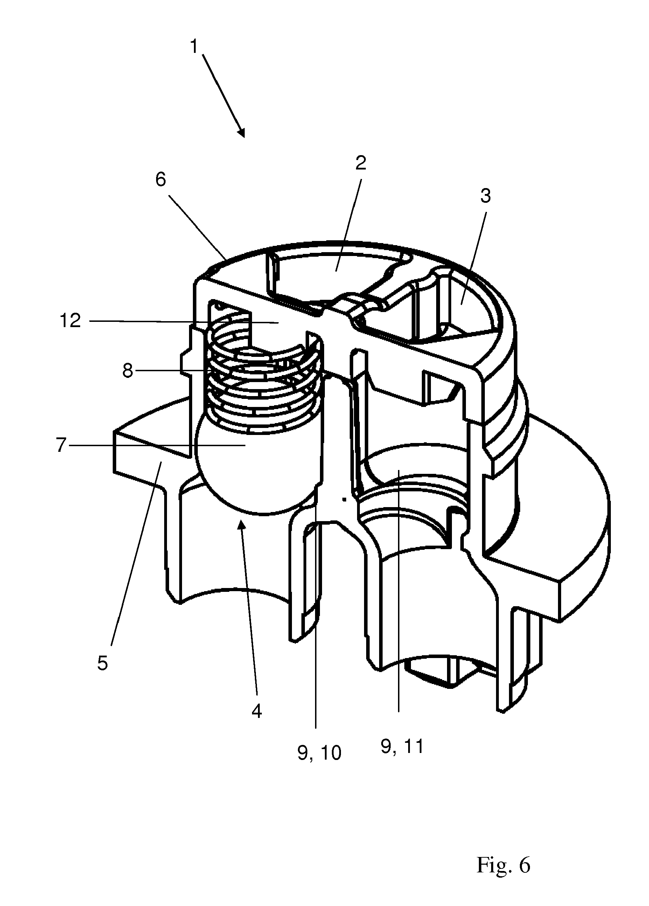

In Fig. 6 zeigt eine dreidimensionale detaillierte Darstellung eines Zwischenstücks 1 gemäss dem ersten Ausführungsbeispiels der Erfindung. Der gezeigte Aufbau entspricht im Wesentlichen Fig. 1. Das Zwischenstück 1 ist zweiteilig und umfasst ein oberes Element 5 und ein unteres Element 6. Das Zwischenstück 1 umfasst einen ersten Kanal 2 zur Förderung einer ersten Komponente von einem Vorratsbehälter (nicht dargestellt) zum Austragelement (nicht dargestellt) und einen zweiten Kanal 3 zur Förderung einer zweiten Komponente vom Vorratsbehälter (nicht dargestellt) zum Austragelement (nicht dargestellt). Der erste und zweite Kanal 2,3 führen dabei durch das obere und untere Element 5,6. Ausserdem sind der erste Kanal 2 und der zweite Kanal 3 getrennt ausgeführt, sodass die erste und die zweite Komponente getrennt durch das Zwischenstück 1 führbar sind. Ein Rückschlagventil 4 ist zwischen dem oberen und dem unteren Element 5,6 am ersten Kanal 2 angeordnet. Im unteren Element 6 ist im ersten Kanal 2 eine umlaufende Kante 9 als erster Ventilsitz 10 und zweiter Ventilsitz 11 ausgebildet.

## Patentansprüche

1. Zwischenstück für die Verbindung eines Austragelements (13) mit einem Vorratsbehälter (17) für eine getrennte Vorratshaltung von mindestens zwei fliessfähigen Komponenten, mit einem ersten Kanal (2) zur Förderung einer ersten Komponente vom Vorratsbehälter (17) zum Austragelement (13) und einen zweiten Kanal (3) zur Förderung einer zweiten Komponente vom Vorratsbehälter (17) zum Austragelement (13), wobei der erste Kanal (2) und der zweite Kanal (3) getrennt ausgeführt sind, sodass die erste und die zweite Komponente getrennt durch das Zwischenstück (1) führbar sind, **dadurch gekennzeichnet, dass**
am ersten oder zweiten Kanal (2,3) ein Rückschlagventil (4) angeordnet und derart ausgestaltet ist, dass der erste oder zweite Kanal (2,3) mittels des Rückschlagventils (4) verschliessbar sind.

2. Zwischenstück nach Anspruch 1, umfassend ein oberes Element (5) und ein unteres Element (6), wobei das Rückschlagventil (4) zwischen dem oberen und dem unteren Element (5,6) am ersten oder zweiten Kanal (2,3) angeordnet ist.

3. Zwischenstück nach Anspruch 1 oder 2, wobei das obere Element (5) oder das untere Element (6) ein Verbindungselement (20) umfassen und das obere Element (5) und das untere Element (6) mittels des Verbindungselements (20) miteinander verbunden sind.

4. Zwischenstück nach einem der vorangehenden Ansprüche, wobei das Rückschlagventil (4) einen Kopf (7) und ein Federelement (8) umfasst.

5. Zwischenstück nach Anspruch 4, wobei der Kopf (7) des Rückschlagventils (4) als Kugel ausgeführt ist.

6. Zwischenstück nach einem der Ansprüche 4 bis 5, wobei im ersten oder zweiten Kanal (2,3) eine umlaufende Kante (9) als erster Ventilsitz (10) oder zweiter Ventilsitz (11),derart ausgebildet ist, dass das Federelement (8) einen Öffnungsdruck auf den Kopf (7) ausübt, der Kopf (7) am ersten oder zweiten Ventilsitz (10,11) anliegt und den ersten oder zweiten Kanal (2,3) verschliesst.

7. Zwischenstück nach einem der Ansprüche 4 bis 6, wobei das obere Element (5) ein Fixierungselement (12) umfasst, und das Federelement (8) am Fixierelement (12) angeordnet und mittels des Fixierelements (12) justierbar ist.

8. Austragelement (13) mit einem Zwischenstück (1) nach einem der Ansprüche 1 bis 7.

9. Austragelement (13) nach Anspruch 8, wobei das Austragelement (13) ein Gehäuse (15) umfasst, welches zumindest ein Mischelement (14) enthält, und das Gehäuse (15) einen Einlassbereich (16) aufweist, wobei das Zwischenstück (1) in dem Einlassbereich (16) angeordnet ist.

10. Vorratsbehälter (17) für eine getrennte Vorratshaltung für mehrere Komponenten mit einem Zwischenstück (1) nach einem der Ansprüche 1 bis 7.

11. Vorratsbehälter (17) nach Anspruch 10, der einen Auslassbereich (18) aufweist, wobei das Zwischenstück (1) in dem Auslassbereich (18) angeordnet ist.

12. Austragvorrichtung (19) mit einem Zwischenstück (1) nach einem der Ansprüche 1 bis 7 oder mit einem Austragelement (13) nach einem der Ansprüche 8 bis 9 oder mit einem Vorratsbehälter (17) nach einem der Ansprüche 10 bis 11.
